(19) Europäisches Patentamt
European Patent Office
Office européen des brevets

(11) **EP 2 514 087 B1**

(12) **EUROPÄISCHE PATENTSCHRIFT**

(45) Veröffentlichungstag und Bekanntmachung des Hinweises auf die Patenterteilung:
**15.07.2015 Patentblatt 2015/29**

(21) Anmeldenummer: **10787485.1**

(22) Anmeldetag: **09.12.2010**

(51) Int Cl.:
**H02M 5/297** *(2006.01)*　　**H02M 7/483** *(2007.01)*

(86) Internationale Anmeldenummer:
**PCT/EP2010/069277**

(87) Internationale Veröffentlichungsnummer:
**WO 2011/082935 (14.07.2011 Gazette 2011/28)**

(54) **VERFAHREN ZUM BETRIEB EINER DIREKTUMRICHTERSCHALTUNG SOWIE VORRICHTUNG ZUR DURCHFÜHRUNG DES VERFAHRENS**

METHOD FOR OPERATING A DIRECT CONVERTER CIRCUIT AND DEVICE FOR CARRYING OUT THE METHOD

PROCÉDÉ POUR CONTROLER UN CONVERTISSEUR DIRECT ET DISPOSITIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2009 EP 09179643**

(43) Veröffentlichungstag der Anmeldung:
**24.10.2012 Patentblatt 2012/43**

(73) Patentinhaber: **ABB Schweiz AG
5400 Baden (CH)**

(72) Erfinder:
• **WINKELNKEMPER, Manfred
5408 Ennetbaden (CH)**
• **KORN, Arthur
5400 Baden (CH)**

(74) Vertreter: **ABB Patent Attorneys
c/o ABB Schweiz AG
Intellectual Property CH-IP
Brown Boveri Strasse 6
5400 Baden (CH)**

(56) Entgegenhaltungen:
**WO-A1-2008/067788**

• **COLIN OATES: "A methodology for developing â Chainlinkâ converters", POWER ELECTRONICS AND APPLICATIONS, 2009. EPE '09. 13TH EUROPEAN CONFERENCE ON, IEEE, PISCATAWAY, NJ, USA, 8. September 2009 (2009-09-08), Seiten 1-10, XP031541239, ISBN: 978-1-4244-4432-8**
• **ANTONIOS ANTONOPOULOS ET AL: "On dynamics and voltage control of the Modular Multilevel Converter", POWER ELECTRONICS AND APPLICATIONS, 2009. EPE '09. 13TH EUROPEAN CONFERENCE ON, IEEE, PISCATAWAY, NJ, USA, 8. September 2009 (2009-09-08), Seiten 1-10, XP031541295, ISBN: 978-1-4244-4432-8**

## Beschreibung

### Technisches Gebiet

Die Erfindung bezieht sich auf das Gebiet der Leistungselektronik. Sie geht aus von einem Verfahren zum Berieb einer Direktumrichterschaltung sowie Vorrichtung zur Durchführung des Verfahrens gemäss dem Oberbegriff der unabhängigen Ansprüche.

### Stand der Technik

Direktumrichterschaltungen, insbesondere Matrixumrichter, hatten in der Vergangenheit eher akademische Bedeutung. Heute jedoch gewinnen Direktumrichterschaltungen vor allem für Industrielle Anwendungen an Bedeutung, da mittels einer Direktumrichterschaltung ohne aufwendigen Gleichspannungszwischenkreis oder Gleichstromzwischenkreis eine Eingangsspannung bzw. ein Eingangsstrom einer ersten Amplitude und einer ersten Frequenz direkt in eine Ausgangsspannung bzw. in einen Ausgangsstrom einer zweiten Amplitude und einer zweiten Frequenz umgewandelt werden kann. Eine solche Direktumrichterschaltung ist beispielsweise in der US 6,900,998 B2 angegeben. Darin weist die Direktumrichterschaltung n=3 Eingangsphasenanschlüsse und p=3 Ausgangsphasenanschlüsse, d.h. die Direktumrichterschaltung der US 6,900,998 B2 ist eingangseitig und ausgangsseitig dreiphasig ausgebildet. Die Direktumrichterschaltung der US 6,900,998 B2 umfasst weiterhin neun Phasenbausteine mit jeweils einer zweipoligen Schaltzellen zum Schalten einer positiven und einer negativen Spannung zwischen den Polen, wobei jeder Ausgangsphasenanschluss mit jedem Eingangsphasenanschluss jeweils unmittelbar über eine Schaltzelle seriell verbunden ist. Eine solche Schaltzelle weist ansteuerbare bidirektionale Leistungshalbleiterschalter mit gesteuerter unidirektionaler Stromführungsrichtung und einen kapazitiven Energiespeicher auf.

Problematisch bei einer Direktumrichterschaltung nach der US 6,900,998 B2 ist, dass die Spannung an jedem Zweig, d.h. an jedem Phasenbaustein nicht derart eingestellt werden kann, dass ein kontinuierlicher Stromfluss durch die Schaltzellen erzielt werden kann, wodurch keine aktive Stromeinstellung durch den jeweiligen Zweig möglich ist. Dadurch ist mit der Direktumrichterschaltung der US 6,900,998 B2 kein oder nur ein sehr eingeschränkter Austausch elektrischer Energie zwischen einzelnen Zweigen möglich. Soll die Direktumrichterschaltung aber in der Lage sein, eine grosse elektrische Energiemenge zu übertragen, so sind die Kapazitäten der Schaltzellen der US 6,900,998 B2 entsprechend gross zu Dimensionieren, woraus ein enormer Platzbedarf einer solchen Direktumrichterschaltung und erhebliche Kosten resultieren. Systeme, aufgebaut mit derartigen Direktumrichterschaltungen werden dadurch ebenfalls einen entsprechend grossen Platzbedarf aufweisen und entsprechend teuer sein.

Energieschwankungen an den einzelnen Phasenbausteinen führen zu Spannungsschwankungen an den kapazitiven Energiespeichern in den zugehörigen Schaltzellen. Für einen sicheren und stabilen Betrieb und um eine günstige Realisierung der Direktumrichterschaltung zu ermöglichen muss aber die Amplitude dieser Energieschwankung am Phasenbaustein begrenzt und minimiert werden können, um die maximale Spannung an jedem einzelnen kapazitiven Energiespeicher der zugehörigen Schaltzelle des Phasenbausteins mit einem möglichst kleinen kapazitiven Energiespeicher auf einen gewünschten Wert begrenzen zu können.

In "A Methodology for Developing 'Chainlink' Converters", EPE 8. September 2009 ist eine Direktumrichterschaltung angegeben, bei der jeder Phasenbaustein eine Induktivität seriell zu der Serienschaltung der Schaltzellen aufweist.

In der WO 2008/067788 A1 ist ein Verfahren für den Betrieb einer Umrichterschaltung nach der WO 2007/023064 A1 angegeben, die den Energiegehalt der Schaltzellen regeln. Das in der WO 2008/067788 A1 beschriebene Verfahren gilt nur für Ausführungen der Umrichterschaltung nach der WO 2007/023064 A1, die drei Phasen eines Systems mit zwei Phasen eines anderen Systems verbinden, wobei die Ströme in den Anschlussklemmen der Direktumrichterschaltung immer Null sind.

In "On Dynamics and Voltage Control of Modular Multilevel Converter", EPE 8. September 2009 ist ein Verfahren für den Betrieb einer Umrichterschaltung angegeben, bei dem die Symmetrierung der Phasenbausteine mit Hilfe einer eigens dafür vorgesehenen Regelung erfolgt.

### Darstellung der Erfindung

Aufgabe der Erfindung ist es deshalb, ein Verfahren zum Betrieb einer Direktumrichterschaltung anzugeben, mittels welchem geringe Energieschwankungen an Phasenbausteinen erreicht werden können. Ferner ist es eine Aufgabe der Erfindung, eine Vorrichtung anzugeben, mit der das erfindungsgemässe Verfahren in besonders einfacher Weise durchgeführt werden kann.

Diese Aufgaben werden durch die Merkmale des Anspruchs 1 bzw. des Anspruchs 5 gelöst. In den abhängigen Ansprüchen sind vorteilhafte Weiterbildungen der Erfindung angegeben.

Die Direktumrichterschaltung weist mindestens zwei Phasenbausteine auf und dient der Verbindung von Phasen eines ersten Strom- oder Spannungssystems mit Phasen eines zweiten Strom- oder Spannungssystems. Weiterhin umfasst jeder Phasenbaustein mehrere zweipolige seriell zueinander geschaltete Schaltzellen und jede Schaltzelle weist ansteuerbare bidirektionale Leistungshalbleiterschalter mit gesteuerter unidirektionaler Stromführungsrichtung und einen kapazitiven Energiespeicher auf. Verfahrensmässig werden die Leistungshalbleiterschalter der Schaltzellen des zugehörigen Phasenbausteins mittels eines Ansteuersignals angesteuert. Nach der Erfindung weist nun jeder Phasenbaustein eine Induktivität seriell zu der Serienschaltung der Schaltzellen auf und für jeden Phasenbaustein wird das Ansteuersignal aus der Differenz eines Referenzsignal bezüglich der Spannung über dem Phasenbaustein und eines Spannungssignals über der Induktivität gebildet, wobei das Spannungssignal über der Induktivität aus einem Referenzsignal bezüglich des Stromes durch den Phasenbaustein gebildet wird. Das Referenzsignal bezüglich des Stromes durch den Phasenbaustein wiederum wird aus einem Mittelwert oder Augenblickswert einer Phasenleistung einer an den Phasenbaustein angeschlossenen Phase des ersten Strom- oder Spannungssystems, aus einem Mittelwert oder Augenblickswert einer Phasenleistung einer an den Phasenbaustein angeschlossenen Phase des zweiten Strom- oder Spannungssystems, aus der Summe der Augenblickswerte oder der Mittelwerte der Phasenleistungen der Phasen des ersten Strom- oder Spannungssystems und aus der Summe der Augenblickswerte oder der Mittelwerte der Phasenleistungen der Phasen des zweiten Strom- oder Spannungssystems gebildet.

Dadurch, dass in die Bildung des Ansteuersignals schlussendlich der Mittelwert oder Augenblickswert der Phasenleistung der an den Phasenbaustein angeschlossenen Phase des ersten Strom- oder Spannungssystems, der Mittelwert oder Augenblickswert der Phasenleistung der an den Phasenbaustein angeschlossenen Phase des zweiten Strom- oder Spannungssystems, die Summe der Augenblickswerte oder der Mittelwerte der Phasenleistungen der Phasen des ersten Strom- oder Spannungssystems und die Summe der Augenblickswerte oder der Mittelwerte der Phasenleistungen der Phasen des zweiten Strom- oder Spannungssystems eingeht, kann vorteilhaft eine Verteilung aller Phasenströme und Ströme des kapazitiven Energiespeichers auf die Phasenbausteine erreicht werden, so dass eine geringe Amplitude der Energieschwankungen an Phasenbausteinen erreicht werden kann, wodurch ein sicherer und stabiler Betrieb der Direktumrichterschaltung erreicht werden kann und die kapazitiven Energiespeicher der Schaltzellen klein dimensioniert werden können und damit platzsparend und kostengünstig sind.

Die erfindungsgemässe Vorrichtung zur Durchführung des Verfahrens zum Betrieb der Direktumrichterschaltung weist eine der Erzeugung des Ansteuersignals dienenden Ansteuerschaltung für jeden Phasenbaustein auf, welche Ansteuerschaltung mit den Leistungshalbleiterschaltern der Schaltzellen des Phasenbausteins verbunden ist. Bezüglich eines jeden Phasenbausteins ist der Ansteuerschaltung zur Bildung des Ansteuersignals die Differenz aus dem Referenzsignal bezüglich der Spannung über dem Phasenbaustein und aus dem Spannungssignal über der Induktivität zugeführt. Zudem ist für sämtliche Phasenbausteine eine gemeinsame erste Berechnungseinheit zur Bildung des Spannungssignals über der Induktivität aus dem Referenzsignal bezüglich des Stromes durch den Phasenbaustein vorgesehen. Für sämtliche Phasenbausteine ist ferner eine gemeinsame zweite Berechnungseinheit zur Bildung des Referenzsignals bezüglich des Stromes durch den Phasenbaustein aus dem Mittelwert oder Augenblickswert der Phasenleistung der an den Phasenbaustein angeschlossenen Phase des ersten Strom- oder Spannungssystems, aus dem Mittelwert oder Augenblickswert der Phasenleistung der an den Phasenbaustein angeschlossenen Phase des zweiten Strom- oder Spannungssystems, aus der Summe der Augenblickswerte oder der Mittelwerte der Phasenleistungen der Phasen des ersten Strom- oder Spannungssystems und aus der Summe der Augenblickswerte oder der Mittelwerte der Phasenleistungen der Phasen des zweiten Strom- oder Spannungssystems vorgesehen.

Die erfindungsgemässe Vorrichtung zur Durchführung des Verfahrens zum Betrieb der Direktumrichterschaltung ist somit sehr einfach und kostengünstig realisierbar, da der Schaltungsaufwand äusserst gering gehalten werden kann und zudem nur eine geringe Anzahl an Bauelementen für den Aufbau benötigt wird. Mittels dieser Vorrichtung ist das erfindungsgemässe Verfahren somit besonders einfach durchführbar.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

Kurze Beschreibung der Zeichnungen

Es zeigen:

Fig. 1 eine Ausführungsform einer erfindungsgemässen Vorrichtung zur Durchführung des erfindungsgemässen Verfahrens zum Betrieb einer Direktumrichterschaltung und

Fig. 2 eine Ausführungsform eines Direktumrichters.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

Wege zur Ausführung der Erfindung

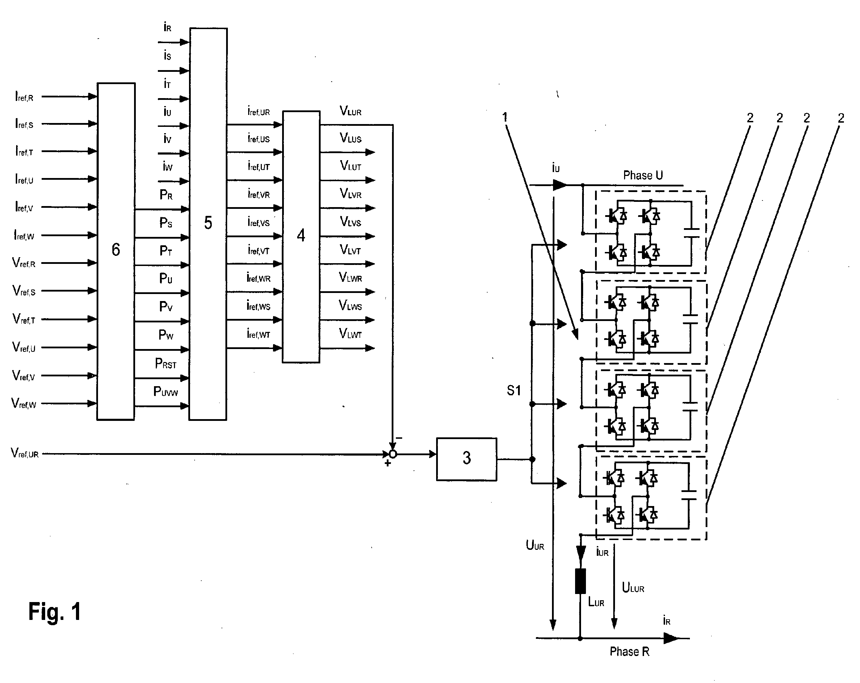

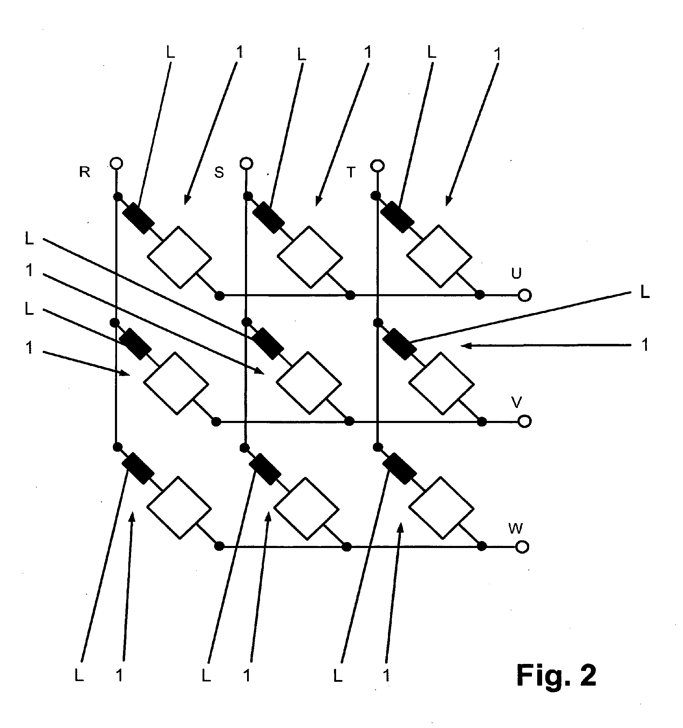

Fig. 1 zeigt eine Ausführungsform einer erfindungsgemässen Vorrichtung zur Durchführung des erfindungsgemässen Verfahrens zum Betrieb einer Direktumrichterschaltung, wobei in Fig. 1 der Übersichtlichkeit halber nur ein Phasenbaustein 1 der Direktumrichterschaltung gezeigt ist. Die Direktumrichterschaltung gemäss Fig. 1 weist allgemein mindestens zwei Phasenbausteine 1 auf, wobei jeder Phasenbaustein 1 der Verbindung von Phasen U, V, W eines ersten Strom- oder Spannungssystems mit Phasen R, S, T eines zweiten Strom- oder Spannungssystems dient. Bezüglich Fig. 1 wird angenommen, dass das erste Strom- oder Spannungssystem drei Phasen U, V, W und das zweite Stromoder Spannungssystems ebenfalls drei Phasen R, S, T aufweist, wobei bezüglich der Systeme natürlich eine beliebige Phasenanzahl denkbar ist. Jeder Phasenbaustein 1 umfasst mehrere zweipolige seriell zueinander geschaltete Schaltzellen 2, wobei jede Schaltzelle 2 ansteuerbare bidirektionale Leistungshalbleiterschalter mit gesteuerter unidirektionaler Stromführungsrichtung und einen kapazitiven Energiespeicher aufweist. Der jeweilige ansteuerbare Leistungshalbleiterschalter ist insbesondere als Abschaltthyristor (GTO - Gate Turn-Off Thyristor) oder als integrierter Thyristor mit kommutierter Ansteuerelektrode (IGCT - Integrated Gate Commutated Thyristor) mit jeweils einer antiparallel geschalteten Diode ausgebildet. Es ist aber auch denkbar, einen ansteuerbaren Leistungshalbleiterschalter beispielsweise als Leistungs-MOSFET mit zusätzlich antiparallel geschalteter Diode oder als Bipolartransistor mit isoliert angeordneter Gateelektrode (IGBT) mit zusätzlich antiparallel geschalteter Diode auszubilden. In Fig. 2 ist beispielhaft eine Ausführungsform eines Direktumrichters mit den vorstehend beschriebenen Phasenbausteinen gezeigt.

Verfahrensmässig werden für jeden Phasenbaustein 1 die Leistungshalbleiterschalter der Schaltzellen 2 mittels eines Ansteuersignals S1 angesteuert. Das Ansteuersignal S1 ist für jede Schaltzelle 2 vorzugsweise zeitlich versetzt, so dass jede Schaltzelle 2 vorteilhaft zeitlich versetzt angesteuert werden kann. Erfindungsgemäss weist nun jeder Phasenbaustein 1 eine Induktivität $L_{UR}$, $L_{US}$, $L_{UT}$; $L_{VR}$, $L_{VS}$, $L_{VT}$; $L_{WR}$, $L_{WS}$, $L_{WT}$ seriell zu der Serienschaltung der Schaltzellen auf und für jeden Phasenbaustein 1 wird das Ansteuersignal S1 aus der Differenz eines Referenzsignals $V_{ref,UR}$, $V_{ref,US}$, $V_{ref,UT}$, $V_{ref,VR}$, $V_{ref,VS}$, $V_{ref,VT}$, $V_{ref,WR}$, $V_{ref,WS}$, $V_{ref,WT}$ bezüglich der Spannung $U_{UR}$, $U_{US}$, $U_{UT}$; $U_{VR}$, $U_{VS}$, $U_{VT}$; $U_{WR}$, $U_{WS}$, $U_{WT}$ über dem Phasenbaustein 1 und eines Spannungssignal $V_{LUR}$, $V_{LUS}$, $V_{LUT}$, $V_{LVR}$, $V_{LVS}$, $V_{LVT}$, $V_{LWR}$, $V_{LWS}$, $V_{LWT}$ über der Induktivität $L_{UR}$, Lus, $L_{UT}$; $L_{VR}$, $L_{VS}$, $L_{VT}$; $L_{WR}$, $L_{WS}$, $L_{WT}$ gebildet, wobei das Spannungssignal $V_{LUR}$, $V_{LUS}$, $V_{LUT}$, $V_{LVR}$, $V_{LVS}$, $V_{LVT}$, $V_{LWR}$, $V_{LWS}$, $V_{LWT}$ über der Induktivität $L_{UR}$, $L_{US}$, $L_{UT}$; $L_{VR}$, $L_{VS}$, $L_{VT}$; $L_{WR}$, $L_{WS}$, $L_{WT}$ aus einem Referenzsignal $i_{ref,UR}$, $i_{ref,US}$, $i_{ref,UT}$, $i_{ref,VR}$, $i_{ref,VS}$, $i_{ref,VT}$, $i_{ref,WR}$, $i_{ref,WS}$, $i_{ref,WT}$ bezüglich des Stromes $i_{UR}$, $i_{US}$, $i_{UT}$; $i_{VR}$, $i_{VS}$, $i_{VT}$; $i_{WR}$, $i_{WS}$, $i_{WT}$ durch den Phasenbaustein 1 gebildet wird. Das Referenzsignal $V_{ref,UR}$, $V_{ref,US}$, $V_{ref,UT}$, $V_{ref,VR}$, $V_{ref,VS}$, $V_{ref,VT}$, $V_{ref,WR}$, $V_{ref,WS}$, $U_{ref,WT}$ bezüglich der Spannung $U_{UR}$, $U_{US}$, $U_{UT}$; $U_{VR}$, $U_{VS}$, $U_{VT}$; $U_{WR}$, $U_{WS}$, $U_{WT}$ über dem Phasenbaustein 1 wird vorzugsweise von einem übergeordneten Stromregler für die Phasenströme der Phasen U, V, W des ersten Strom- oder Spannungssystems und von einem übergeordneten Stromregler für die Phasenströme der Phasen R, S, T des zweiten Strom- oder Spannungssystems erzeugt. Desweiteren wird das Referenzsignal $i_{ref,UR}$, $i_{ref,US}$, $i_{ref,UT}$, $i_{ref,VR}$, $i_{ref,VS}$, $i_{ref,VT}$, $i_{ref,WR}$, $i_{ref,WS}$, $I_{ref,WT}$ bezüglich des Stromes $i_{UR}$, $i_{US}$, $i_{UT}$; $i_{VR}$, $i_{VS}$, $i_{VT}$; $i_{WR}$, $i_{WS}$, $i_{WT}$ durch den Phasenbaustein 1 aus einem Mittelwert $\overline{P}_U$, $\overline{P}_V$, $\overline{P}_W$ oder Augenblickswert $P_U$, $P_V$, $P_W$ einer Phasenleistung einer an den Phasenbaustein 1 angeschlossenen Phase U, V, W des ersten Strom- oder Spannungssystems, aus einem Mittelwert $\overline{P}_R$, $\overline{P}_S$, $\overline{P}_T$ oder Augenblickswert $P_R$, $P_S$, $P_T$ einer Phasenleistung einer an den Phasenbaustein 1 angeschlossenen Phase R, S, T des zweiten Strom- oder Spannungssystems, aus der Summe der Augenblickswerte $P_{UVW}$ oder der Mittelwerte $P_{UVWM}$ der Phasenleistungen der Phasen U, V, W des ersten Strom- oder Spannungssystems und aus der Summe der Augenblickswerte $P_{RST}$ oder der Mittelwerte $P_{RSTM}$ der Phasenleistungen der Phasen R, S, T des zweiten Strom- oder Spannungssystems gebildet.

Dadurch, dass in die Bildung des Ansteuersignals S1 schlussendlich der Mittelwert $\overline{P}_U$, $\overline{P}_V$, $\overline{P}_W$ oder Augenblickswert $P_U$, $P_V$, $P_W$ der Phasenleistung der an den Phasenbaustein 1 angeschlossenen Phase U, V, W des ersten Strom- oder Spannungssystems, der Mittelwert $\overline{P}_R$, $\overline{P}_S$, $\overline{P}_T$ oder Augenblickswert $P_R$, $P_S$, $P_T$ der Phasenleistung der an den Phasenbaustein 1 angeschlossenen Phase R, S, T des zweiten Strom- oder Spannungssystems, die Summe der Augenblickswerte $P_{UVW}$ oder der Mittelwerte $P_{UVWM}$ der Phasenleistungen der Phasen U, V, W des ersten Strom- oder Spannungssystems und die Summe der Augenblickswerte $P_{RST}$ oder der Mittelwerte $P_{RSTM}$ der Phasenleistungen der Phasen R, S, T des zweiten Strom- oder Spannungssystems eingeht, kann mit Vorteil eine Verteilung aller Phasenströme und Ströme des kapazitiven Energiespeichers auf die Phasenbausteine 1 erreicht werden, so dass eine gewünschte geringe Amplitude der Energieschwankungen an Phasenbausteinen 1 erzielt werden kann, wodurch ein sicherer und stabiler Betrieb der Direktumrichterschaltung erreicht werden kann und die kapazitiven Energiespeicher der Schaltzellen 2 klein dimensioniert werden können und damit platzsparend und kostengünstig sind.

Allgemein wird zur Bildung des Spannungssignals $V_{LXY}$ über der Induktivität $L_{XY}$ des zugehörigen Phasenbausteins 1 folgende Formel verwendet:

$$V_{LXY} = L_{XY} \cdot \frac{d}{dt} i_{ref,XY} \qquad [1],$$

wobei der Index XY allgemein die Verbindung einer Phase X des ersten Strom- oder Spannungssystems mit einer Phase Y des zweiten Strom- oder Spannungssystems angibt. Alternativ kann das Spannungssignal $V_{LXY}$ über der Induktivität $L_{XY}$ des zugehörigen Phasenbausteins 1 auch beispielsweise durch eine Rückführung gebildet werden:

$$V_{LXY} = K(i_{ref,XY} - i_{XY}) \qquad [1a],$$

wobei K ein wählbarer Faktor ist.

Gemäss Fig. 1 sind die Leistungshalbleiterschalter einer jeden Schaltzelle 2 nach Art einer Brückenschaltung verschaltet, wobei der kapazitive Energiespeicher parallel zu der Brückenschaltung geschaltet ist. Alternativ wäre es auch denkbar, die Leistungshalbleiterschalter einer jeden Schaltzelle 2 nach Art einer Halbbrückenschaltung zu verschalten, wobei der kapazitive Energiespeicher dann parallel zu der Halbbrückenschaltung geschaltet ist.

Für jeden Phasenbaustein 1 wird das Referenzsignal $i_{ref,UR}$, $i_{ref,US}$, $i_{ref,UT}$, $i_{ref,VR}$, $i_{ref,VS}$, $i_{ref,VT}$, $i_{ref,WR}$, $i_{ref,WS}$, $i_{ref,WT}$ bezüglich des Stromes $i_{UR}$, $i_{US}$, $i_{UT}$; $i_{VR}$, $i_{VS}$, $i_{VT}$; $i_{WR}$, $i_{WS}$, $i_{WT}$ durch den Phasenbaustein 1 zusätzlich aus einem Phasenstrom $i_U$, $i_V$, $i_W$ der an den Phasenbaustein 1 angeschlossenen Phase U, V, W des ersten Strom- oder Spannungssystems und aus einem Phasenstrom $i_R$, $i_S$, $i_T$ der an den Phasenbaustein 1 angeschlossenen Phase R, S, T des zweiten Strom- oder Spannungssystems gebildet.

Allgemein wird das Referenzsignal $i_{ref,XY}$ bezüglich des Stromes $i_{XY}$ durch den Phasenbaustein 1 somit durch folgende Formel gebildet:

$$i_{ref,XY} = \frac{\overline{P_X}}{P_{1M}} \cdot i_Y + \frac{\overline{P_Y}}{P_{2M}} \cdot i_X \qquad [2a],$$

wobei allgemein der Index X eine Phase des ersten Strom- oder Spannungssystems, der Index Y eine Phase des zweiten Strom- oder Spannungssystems, $\overline{P_X}$, $\overline{P_Y}$ die Mittelwerte der Phasenleistungen $P_X$, $P_Y$ und $P_{1M}$ die Summe der Mittelwerte der Phasenleistungen des ersten Strom- oder Spannungssystems und $P_{2M}$ die Summe der Mittelwerte der Phasenleistungen des zweiten Strom- oder Spannungssystems sind.

Alternativ ist es auch denkbar, dass das Referenzsignal $i_{ref,XY}$ bezüglich des Stromes $i_{XY}$ durch den Phasenbaustein 1 durch folgende Formel gebildet:

$$i_{ref,XY} = \frac{P_X}{P_1} \cdot i_Y + \frac{P_Y}{P_2} \cdot i_X \qquad [2b],$$

wobei allgemein erneut der Index X eine Phase des ersten Strom- oder Spannungssystems, der Index Y eine Phase des zweiten Strom- oder Spannungssystems, $P_X$, $P_Y$ Augenblickswerte der Phasenleistungen und $P_1$ die Summe der Augenblickswerte der Phasenleistungen des ersten Strom- oder Spannungssystems und $P_2$ die Summe der Augenblickswerte der Phasenleistungen des zweiten Strom- oder Spannungssystems sind.

Vorzugsweise ist der jeweilige Phasenstrom $i_U$, $i_V$, $i_W$ der an den Phasenbaustein 1 angeschlossenen Phase U, V, W des ersten Strom- oder Spannungssystems sowie der jeweilige Phasenstrom $i_R$, $i_S$, $i_T$ der an den Phasenbaustein 1 angeschlossenen Phase R, S, T des zweiten Strom- oder Spannungssystems ein Augenblickswert, der beispielsweise durch Messung ermittelt wird.

Für jeden Phasenbaustein 1 wird der Augenblickswert der Phasenleistung $P_U$, $P_V$, $P_W$ der an den Phasenbaustein 1 angeschlossenen Phase U, V, W des ersten Strom- oder Spannungssystems beispielsweise aus einem Referenzsignal $I_{ref,U}$, $I_{ref,V}$, $I_{ref,W}$ bezüglich des Phasenstromes $i_U$, $i_V$, $i_W$ der an den Phasenbaustein 1 angeschlossenen Phase U, V, W des ersten Strom- oder Spannungssystems und aus einem Referenzsignal $V_{ref,U}$, $V_{ref,V}$, $V_{ref,W}$ bezüglich einer Phasenspannung $u_U$, $u_V$, $u_W$ der an den Phasenbaustein 1 angeschlossenen Phase U, V, W des ersten Strom- oder Spannungssystems gebildet. Alternativ ist es auch denkbar, dass der Augenblickswert der Phasenleistung $P_U$, $P_V$, $P_W$ der an den Phasenbaustein 1 angeschlossenen Phase U, V, W des ersten Strom- oder Spannungssystems beispielsweise aus dem Phasenstromes $i_U$, $i_V$, $i_W$, beispielsweise aus einem Messwert, der an den Phasenbaustein 1 angeschlossenen Phase U, V, W des ersten Strom- oder Spannungssystems und aus einer Phasenspannung $u_U$, $u_V$, $u_W$, beispielsweise aus einem Messwert, der an den Phasenbaustein 1 angeschlossenen Phase U, V, W des ersten Strom- oder Spannungssystems gebildet wird.

Darüberhinaus wird der Augenblickswert der Phasenleistung $P_R$, $P_S$, $P_T$ der an den Phasenbaustein 1 angeschlossenen Phase R, S, T des zweiten Strom- oder Spannungssystems beispielsweise aus einem Referenzsignal $I_{ref,R}$, $I_{ref,S}$, $I_{ref,T}$ bezüglich des Phasenstromes $i_R$, $i_S$, $i_T$ der an den Phasenbaustein 1 angeschlossenen Phase R, S, T des zweiten Strom- oder Spannungssystems und aus einem Referenzsignal $V_{ref,R}$, $V_{ref,S}$, $V_{ref,T}$ bezüglich einer Phasenspannung $U_R$, $U_S$, $U_T$ der an den Phasenbaustein 1 angeschlossenen Phase R, S, T des zweiten Strom- oder Spannungssystems gebildet.. Alternativ ist es auch denkbar, dass der Augenblickswert der Phasenleistung $P_R$, $P_S$, $P_T$ der an den Phasenbaustein 1 angeschlossenen Phase R, S, T des zweiten Strom- oder Spannungssystems beispielsweise aus dem Phasenstromes $i_R$, $i_S$, $i_T$, beispielsweise aus einem Messwert, der an den Phasenbaustein 1 angeschlossenen Phase R, S, T des zweiten Strom- oder Spannungssystems und aus einer Phasenspannung $u_R$, $u_S$, $u_T$, beispielsweise aus einem Messwert, der an den Phasenbaustein 1 angeschlossenen Phase R, S, T des zweiten Strom- oder Spannungssystems gebildet wird.

Der jeweilige Augenblickswert der Phasenleistung $P_U$, $P_V$, $P_W$ der an den Phasenbaustein 1 angeschlossenen Phase U, V, W des ersten Strom- oder Spannungssystems und der jeweilige Augenblickswert der Phasenleistung $P_R$, $P_S$, $P_T$ der an den Phasenbaustein 1 angeschlossenen Phase R, S, T des zweiten Strom- oder Spannungssystems wird insbesondere nach Formel [3a] berechnet:

$$P_X = V_{ref,X} \cdot I_{ref,X}$$
$$P_Y = V_{ref,Y} \cdot I_{ref,Y}$$
[3a],

wobei erneut allgemein der Index X eine Phase des ersten Strom- oder Spannungssystems, der Index Y eine Phase des zweiten Strom- oder Spannungssystems ist.

Das Referenzsignal $I_{ref,U}$, $I_{ref,V}$, $I_{ref,W}$ bezüglich des Phasenstromes $i_U$, $i_V$, $i_W$ der an den Phasenbaustein 1 angeschlossenen Phase U, V, W des ersten Strom- oder Spannungssystems oder allgemein $I_{ref,X}$, das Referenzsignal $V_{ref,U}$, $V_{ref,V}$, $V_{ref,W}$ bezüglich der Phasenspannung $u_U$, $u_V$, $u_W$ der an den Phasenbaustein 1 angeschlossenen Phase U, V, W des ersten Strom- oder Spannungssystems oder allgemein $V_{ref,X}$, das Referenzsignal $I_{ref,R}$, $I_{ref,S}$, $I_{ref,T}$ bezüglich des Phasenstromes $i_R$, $i_R$, $i_T$ der an den Phasenbaustein 1 angeschlossenen Phase R, S, T des zweiten Strom- oder Spannungssystems oder allgemein $I_{ref,Y}$ sowie das Referenzsignal $V_{ref,R}$, $V_{ref,S}$, $V_{ref,T}$ bezüglich der Phasenspannung $u_R$, $u_S$, $u_T$ der an den Phasenbaustein 1 angeschlossenen Phase R, S, T des zweiten Strom- oder Spannungssystems oder allgemein $V_{ref,Y}$ ist jeweils vorgebbar.

Alternativ ist es auch möglich, dass der jeweilige Augenblickswert der Phasenleistung $P_U$, $P_V$, $P_W$ der an den Phasenbaustein 1 angeschlossenen Phase U, V, W des ersten Strom- oder Spannungssystems und der jeweilige Augenblickswert der Phasenleistung $P_R$, $P_S$, $P_T$ der an den Phasenbaustein 1 angeschlossenen Phase R, S, T des zweiten Strom- oder Spannungssystems nach Formel [3b] aus den genannten Messwerten berechnet wird.

$$P_X = u_X \cdot i_X$$
$$P_Y = u_Y \cdot i_Y$$
[3b],

wobei erneut allgemein der Index X eine Phase des ersten Strom- oder Spannungssystems, der Index Y eine Phase des zweiten Strom- oder Spannungssystems ist.

Es sei explizit erwähnt, dass die erwähnte Bildung der vorstehend genannten Augenblickswerte $P_U$, $P_V$, $P_W$, $P_R$, $P_S$, $P_T$ der Phasenleistungen auch andersweitig erfolgen kann.

Die erfindungsgemässe Vorrichtung zur Durchführung des Verfahrens zum Betrieb einer Direktumrichterschaltung weist gemäss Fig. 1 für jeden Phasenbaustein 1 eine der Erzeugung des Ansteuersignals S1 dienende Ansteuerschaltung 3 auf, welche Ansteuerschaltung 3 mit den Leistungshalbleiterschaltern der Schaltzellen 2 des Phasenbausteins 1 verbunden ist. Nach der Erfindung ist bezüglich eines jeden Phasenbausteins 1 der Ansteuerschaltung 3 zur Bildung des Ansteuersignals S1 die Differenz aus dem Referenzsignal $V_{ref,UR}$, $V_{ref,US}$, $V_{ref,UT}$, $V_{ref,VR}$, $V_{ref,VS}$, $V_{ref,VT}$, $V_{ref,WR}$, $V_{ref,WS}$, $V_{ref,WT}$ bezüglich der Spannung $U_{UR}$, $U_{US}$, $U_{UT}$; $U_{VR}$, $U_{VS}$, $U_{VT}$; $U_{WR}$, $U_{WS}$, $U_{WT}$ über dem Phasenbaustein 1 und aus einem Spannungssignal $V_{LUR}$, $V_{LUS}$, $V_{LUT}$, $V_{LVR}$, $V_{LVS}$, $V_{LVT}$, $V_{LWR}$, $V_{LWS}$, $V_{LWT}$ über der Induktivität $L_{UR}$, $L_{US}$, $L_{UT}$; $L_{VR}$, $L_{VS}$, $L_{VT}$; $L_{WR}$, $L_{WS}$, $L_{WT}$ zugeführt. Ferner ist für sämtliche Phasenbausteine 1 eine gemeinsame erste Berechnungseinheit 4 zur Bildung des Spannungssignals $V_{LUR}$, $V_{LUS}$, $V_{LUT}$, $V_{LVR}$, $V_{LVS}$, $V_{LVT}$, $V_{LWR}$, $V_{LWS}$, $V_{LWT}$ über der Induktivität $L_{UR}$, $L_{US}$, $L_{UT}$; $L_{VR}$, $L_{VS}$, $L_{VT}$; $L_{WR}$, $L_{WS}$, $L_{WT}$, insbesondere nach Forme [1], aus dem Referenzsignal $i_{ref,UR}$, $i_{ref,US}$, $i_{ref,UT}$, $i_{ref,VR}$, $i_{ref,VS}$, $i_{ref,VT}$, $i_{ref,WR}$, $i_{ref,WS}$ $i_{ref,WT}$ bezüglich des Stromes $i_{UR}$, $i_{US}$, $i_{UT}$; $i_{VR}$, $i_{VS}$, $i_{VT}$; $i_{WR}$, $i_{WS}$, $i_{WT}$ durch den Phasenbaustein 1 vorgesehen. Desweiteren ist für sämtliche Phasenbausteine 1 eine gemeinsame zweite Berechnungseinheit 5 zur Bildung des Referenzsignals $i_{ref,UR}$, $i_{ref,US}$, $i_{ref,UT}$, $i_{ref,VR}$, $i_{ref,VS}$, $i_{ref,VT}$, $i_{ref,WR}$, $i_{ref,WS}$, $i_{ref,WT}$ bezüglich des Stromes $i_{UR}$, $i_{US}$, $i_{UT}$; $i_{VR}$, $i_{VS}$, $i_{VT}$; $i_{WR}$, $i_{WS}$, $i_{WT}$ durch den Phasenbaustein 1, insbesondere nach Formel [2a] respektive [2b], aus dem Mittelwert $\overline{P}_U$, $\overline{P}_V$, $\overline{P}_W$ oder Augenblickswert $P_U$, $P_V$, $P_W$ der Phasenleistung der an den Phasenbaustein 1 angeschlossenen Phase U, V, W des ersten Strom- oder Spannungssystems, aus dem Mittelwert $\overline{P}_R$, $\overline{P}_S$, $\overline{P}_T$ oder Augenblickswert $P_R$, $P_S$, $P_T$ der Phasenleistung der an den Phasenbaustein 1 angeschlossenen Phase R, S, T des zweiten Strom- oder Spannungssystems, aus der Summe der Augenblickswerte $P_{UVW}$ oder der Mittelwerte $P_{UVWM}$ der Phasenleistungen der Phasen U, V, W des ersten Strom- oder Spannungssystems und aus der Summe der Augenblickswerte $P_{RST}$ oder der Mittelwerte $P_{RSTM}$ der Phasenleistungen der Phasen R, S, T des zweiten Strom- oder Spannungssystems vorgesehen.

Die gemeinsame zweite Berechnungseinheit 5 bildet das Referenzsignal $i_{ref,UR}$, $i_{ref,US}$, $i_{ref,UT}$, $i_{ref,VR}$, $i_{ref,VS}$, $i_{ref,VT}$, $i_{ref,WR}$, $i_{ref,WS}$, $i_{ref,WT}$ bezüglich des Stromes $i_{UR}$, $i_{US}$, $i_{UT}$; $i_{VR}$, $i_{VS}$, $i_{VT}$; $i_{WR}$, $i_{WS}$, $i_{WT}$ durch den Phasenbaustein 1, insbesondere nach Formel [2a] respektive [2b], zusätzlich aus dem Phasenstrom $i_U$, $i_V$, $i_W$ der an den Phasenbaustein 1 angeschlossenen Phase U, V, W des ersten Strom- oder Spannungssystems und aus dem Phasenstrom $i_R$, $i_S$, $i_T$ der an den Phasenbaustein 1 angeschlossenen Phase R, S, T des zweiten Strom- oder Spannungssystems.

Darüberhinaus ist für sämtliche Phasenbausteine 1 eine gemeinsame dritte Berechnungseinheit 6 zur Bildung des Augenblickswertes der Phasenleistung $P_U$, $P_V$, $P_W$ der an den Phasenbaustein 1 angeschlossenen Phase U, V, W des ersten Strom- oder Spannungssystems, insbesondere nach Formel [3a], aus dem Referenzsignal $I_{ref,U}$, $I_{ref,V}$, $I_{ref,W}$ bezüglich des Phasenstromes $i_U$, $i_V$, $i_W$ der an den Phasenbaustein 1 angeschlossenen Phase U, V, W des ersten Strom- oder Spannungssystems und aus dem Referenzsignal $V_{ref,U}$, $V_{ref,V}$ $V_{ref,W}$ bezüglich der Phasenspannung $u_U$, $u_V$, $u_w$ der an den Phasenbaustein 1 angeschlossenen Phase U, V, W des ersten Strom- oder Spannungssystems und zur Bildung des Augenblickswertes der Phasenleistung $P_R$, $P_S$, $P_T$ der an den Phasenbaustein 1 angeschlossenen Phase R, S, T des zweiten Strom- oder Spannungssystems, insbesondere nach Formel [3a], aus dem Referenzsignal $I_{ref,R}$, $I_{ref,S}$, $I_{ref,T}$ bezüglich des Phasenstromes $i_R$, $i_R$, $i_T$ der an den Phasenbaustein 1 angeschlossenen Phase R, S, T des zweiten Strom- oder Spannungssystems und aus einem Referenzsignal $V_{ref,R}$, $V_{ref,S}$, $V_{ref,T}$ bezüglich der Phasenspannung $u_R$, $u_S$, $u_T$ der an den Phasenbaustein 1 angeschlossenen Phase R, S, T des zweiten Strom- oder Spannungssystems vorgesehen.

Alternativ dazu ist für sämtliche Phasenbausteine 1 eine gemeinsame dritte Berechnungseinheit 6 zur Bildung des Augenblickswertes der Phasenleistung $P_U$, $P_V$, $P_W$ der an den Phasenbaustein 1 angeschlossenen Phase U, V, W des ersten Strom- oder Spannungssystems, insbesondere nach Formel [3b], aus dem Phasenstrom iu, $i_V$, $i_W$ der an den Phasenbaustein 1 angeschlossenen Phase U, V, W des ersten Strom- oder Spannungssystems und aus der Phasenspannung $u_U$, $u_V$, $u_W$ der an den Phasenbaustein 1 angeschlossenen Phase U, V, W des ersten Strom- oder Spannungssystems und zur Bildung des Augenblickswertes der Phasenleistung $P_R$, $P_S$, $P_T$ der an den Phasenbaustein 1 angeschlossenen Phase R, S, T des zweiten Strom- oder Spannungssystems, insbesondere nach Formel [3b], aus dem Phasenstrom $i_R$, $i_S$, $i_T$ der an den Phasenbaustein 1 angeschlossenen Phase R, S, T des zweiten Strom- oder Spannungssystems und aus einer Phasenspannung $u_R$, $u_S$, $u_T$ der an den Phasenbaustein 1 angeschlossenen Phase R, S, T des zweiten Strom- oder Spannungssystems vorgesehen.

Insgesamt konnte gezeigt werden, dass die, insbesondere nach Fig. 1, erfindungsgemässen Vorrichtungen zur Durchführung des erfindungsgemässen Verfahrens zum Betrieb der Direktumrichterschaltung sehr einfach und kostengünstig realisiert werden können, da der Schaltungsaufwand äusserst gering ist und zudem nur eine geringe Anzahl an Bauelementen für den Aufbau benötigt wird. Somit ist mit diesen Vorrichtungen das erfindungsgemässe Verfahren besonders einfach durchführbar.

**Bezugszeichenliste**

1    Phasenbaustein

2    Schaltzelle
3    Ansteuerschaltung
4    erste Berechnungseinheit
5    zweite Berechnungseinheit
6    dritte Berechnungseinheit


**Patentansprüche**

1. Verfahren zum Betrieb einer Direktumrichterschaltung, wobei die Direktumrichterschaltung mindestens zwei Phasenbausteine (1) aufweist und der Verbindung von Phasen (U, V, W) eines ersten Strom- oder Spannungssystems mit Phasen (R, S, T) eines zweiten Strom- oder Spannungssystems dient, jeder Phasenbaustein (1) mehrere zweipolige seriell zueinander geschaltete Schaltzellen (2) umfasst und jede Schaltzelle (2) ansteuerbare bidirektionale Leistungshalbleiterschalter mit gesteuerter unidirektionaler Stromführungsrichtung und einen kapazitiven Energiespeicher aufweist,
bei dem die Leistungshalbleiterschalter der Schaltzellen (2) des zugehörigen Phasenbausteins (1) mittels eines Ansteuersignals (S1) angesteuert werden und jeder Phasenbaustein (1) eine Induktivität ($L_{UR}$, Lus, $L_{UT}$; $L_{VR}$, $L_{VS}$, $L_{VT}$; $L_{WR}$, $L_{WS}$, $L_{WT}$) seriell zu der Serienschaltung der Schaltzellen aufweist,
**dadurch gekennzeichnet,**
**dass** für jeden Phasenbaustein (1) das Ansteuersignal (S1) aus der Differenz eines Referenzsignals ($V_{ref,UR}$, $V_{ref,US}$, $V_{ref,UT}$, $V_{ref,VR}$, $V_{ref,VS}$, $V_{ref,VT}$, $V_{ref,WR}$, $V_{ref,WS}$, $V_{ref,WT}$) bezüglich der Spannung ($U_{UR}$, $U_{US}$, $U_{UT}$; $U_{VR}$, $U_{VS}$, $U_{VT}$; $U_{WR}$, $U_{WS}$, $U_{WT}$) über dem Phasenbaustein (1) und eines Spannungssignal ($V_{LUR}$, $V_{LUS}$, $V_{LUT}$, $V_{LVR}$, $V_{LVS}$, $V_{LVT}$, $V_{LWR}$, $V_{LWS}$, $V_{LWT}$) über der Induktivität ($L_{UR}$, $L_{US}$, $L_{UT}$; $L_{VR}$, $L_{VS}$, $L_{VT}$; $L_{WR}$, $L_{WS}$, $L_{WT}$) gebildet wird, und
**dass** das Spannungssignal ($V_{LUR}$, $V_{LUS}$, $V_{LUT}$, $V_{LVR}$, $V_{LVS}$, $V_{LVT}$, $V_{LWR}$, $V_{LWS}$, $V_{LWT}$) über der Induktivität ($L_{UR}$, Lus, $L_{UT}$; $L_{VR}$, $L_{VS}$, $L_{VT}$; $L_{WR}$, $L_{WS}$, $L_{WT}$) aus einem Referenzsignal ($i_{ref,UR}$, $i_{ref,US}$, $i_{ref,UT}$, $i_{ref,VR}$, $i_{ref,VS}$, $i_{ref,VT}$, $i_{ref,WR}$, $i_{ref,WS}$, $i_{ref,WT}$) bezüglich des Stromes ($i_{UR}$, $i_{US}$, $i_{UT}$; $i_{VR}$, $i_{VS}$, $i_{VT}$; $i_{WR}$, $i_{WS}$, $i_{WT}$) durch den Phasenbaustein (1) gebildet wird und
**dass** das Referenzsignal ($i_{ref,UR}$, $i_{ref,US}$, $i_{ref,UT}$, $i_{ref,VR}$, $i_{ref,VS}$, $i_{ref,VT}$, $i_{ref,WR}$, $i_{ref,WS}$, $i_{ref,WT}$) bezüglich des Stromes ($i_{UR}$, $i_{US}$, $i_{UT}$; $i_{VR}$, $i_{VS}$, $i_{VT}$; $i_{WR}$, $i_{WS}$, $i_{WT}$) durch den Phasenbaustein (1) aus einem Mittelwert ($\overline{P}_U$,$\overline{P}_V$,$\overline{P}_W$) oder Augenblickswert ($P_U$, $P_V$, $P_W$) einer Phasenleistung einer an den Phasenbaustein (1) angeschlossenen Phase (U, V, W) des ersten Strom- oder Spannungssystems, aus einem Mittelwert ($\overline{P}_R$,$\overline{P}_S$,$\overline{P}_T$) oder Augenblickswert ($P_R$, $P_S$, $P_T$) einer Phasenleistung einer an den Phasenbaustein (1) angeschlossenen Phase (R, S, T) des zweiten Strom- oder Spannungssystems, aus der Summe der Augenblickswerte ($P_{UVM}$) oder der Mittelwerte ($P_{UVWM}$) der Phasenleistungen der Phasen (U, V, W) des ersten Strom- oder Spannungssystems und aus der Summe der Augenblickswerte ($P_{RST}$) oder der Mittelwerte ($P_{RSTM}$) der Phasenleistungen der Phasen (R, S, T) des zweiten Strom- oder Spannungssystems gebildet wird.

2. Verfahren nach Anspruch 1, **dadurch gekennzeichnet, dass** für jeden Phasenbaustein (1) das Referenzsignal ($i_{ref,UR}$, $i_{ref,US}$, $i_{ref,UT}$, $i_{ref,VR}$, $i_{ref,VS}$, $i_{ref,VT}$, $i_{ref,WR}$, $i_{ref,WS}$, $i_{ref,WT}$) bezüglich des Stromes ($i_{UR}$, $i_{US}$, $i_{UT}$; $i_{VR}$, $i_{VS}$, $i_{VT}$; $i_{WR}$, $i_{WS}$, $i_{WT}$) durch den Phasenbaustein (1) zusätzlich aus einem Phasenstrom ($i_U$, $i_V$, $i_W$) der an den Phasenbaustein (1) angeschlossenen Phase (U,V, W) des ersten Strom- oder Spannungssystems und aus einem Phasenstrom ($i_R$, $i_S$, $i_T$) der an den Phasenbaustein (1) angeschlossenen Phase (R, S, T) des zweiten Strom- oder Spannungssystems gebildet wird.

3. Verfahren nach Anspruch 2, **dadurch gekennzeichnet, dass** für jeden Phasenbaustein (1) der Augenblickswert der Phasenleistung ($P_U$, $P_V$, $P_W$) der an den Phasenbaustein (1) angeschlossenen Phase (U, V, W) des ersten Strom- oder Spannungssystems aus einem Referenzsignal ($I_{ref,U}$, $I_{ref,V}$, $I_{ref,W}$) bezüglich des Phasenstromes ($i_U$, $i_V$, $i_W$) der an den Phasenbaustein (1) angeschlossenen Phase (U, V, W) des ersten Strom- oder Spannungssystems und aus einem Referenzsignal ($V_{ref,U}$, $V_{ref,V}$, $V_{ref,W}$) bezüglich einer Phasenspannung ($U_U$, $U_V$, $U_W$) der an den Phasenbaustein (1) angeschlossenen Phase (U, V, W) des ersten Strom- oder Spannungssystems gebildet wird, und dass der Augenblickswert der Phasenleistung ($P_R$, $P_S$, $P_T$) der an den Phasenbaustein (1) angeschlossenen Phase (R, S, T) des zweiten Strom- oder Spannungssystems aus einem Referenzsignal ($I_{ref,R}$, $I_{ref,S}$, $I_{ref,T}$) bezüglich des Phasenstromes ($i_R$, $i_S$, $i_T$) der an den Phasenbaustein (1) angeschlossenen Phase (R, S, T) des zweiten Strom- oder Spannungssystems und aus einem Referenzsignal ($V_{ref,R}$, $V_{ref,S}$, $V_{ref,T}$) bezüglich einer Phasenspannung ($U_R$, $U_S$, $U_T$) der an den Phasenbaustein (1) angeschlossenen Phase (R, S, T) des zweiten Strom- oder Spannungssystems gebildet wird.

4. Verfahren nach Anspruch 2, **dadurch gekennzeichnet, dass** für jeden Phasenbaustein (1) der Augenblickswert der Phasenleistung ($P_U$, $P_V$, $P_W$) der an den Phasenbaustein (1) angeschlossenen Phase (U, V, W) des ersten Strom- oder Spannungssystems aus einem Phasenstrom ($i_U$, $i_V$, iw) der an den Phasenbaustein (1) angeschlossenen Phase (U, V, W) des ersten Strom- oder Spannungssystems und aus einer Phasenspannung ($u_U$, $u_V$, $u_W$) der an den Phasenbaustein (1) angeschlossenen Phase (U, V, W) des ersten Strom- oder Spannungssystems gebildet wird, und dass der Augenblickswert der Phasenleistung ($P_R$, $P_S$, $P_T$) der an den Phasenbaustein (1) angeschlossenen Phase (R, S, T) des zweiten Strom- oder Spannungssystems aus einem Phasenstrom ($i_R$, $i_S$ $i_T$) der an den Phasenbaustein (1) angeschlossenen Phase (R, S, T) des zweiten Strom- oder Spannungssystems und aus einer Phasenspannung ($u_R$, $u_S$, $u_T$) der an den Phasenbaustein (1) angeschlossenen Phase (R, S, T) des zweiten Strom- oder Spannungssystems gebildet wird.

5. Vorrichtung zur Durchführung eines Verfahrens zum Betrieb einer Direktumrichterschaltung, wobei die Direktumrichterschaltung mindestens zwei Phasenbausteine (1) aufweist und der Verbindung von Phasen (U, V, W) eines ersten Strom- oder Spannungssystems mit Phasen (R, S, T) eines zweiten Strom- oder Spannungssystems dient, jeder Phasenbaustein (1) mehrere zweipolige seriell zueinander geschaltete Schaltzellen (2) umfasst und jede Schaltzelle (2) ansteuerbare bidirektionale Leistungshalbleiterschalter mit gesteuerter unidirektionaler Stromführungsrichtung und einen kapazitiven Energiespeicher aufweist,

mit einer der Erzeugung eines Ansteuersignals (S1) dienenden Ansteuerschaltung (3) für jeden Phasenbaustein (1), welche Ansteuerschaltung (3) mit den Leistungshalbleiterschaltern der Schaltzellen (2) des Phasenbausteins (1) verbunden ist, und jeder Phasenbaustein (1) eine Induktivität ($L_{UR}$, $L_{US}$, $L_{UT}$; $L_{VR}$, $L_{VS}$, $L_{VT}$; $L_{WR}$, $L_{WS}$, $L_{WT}$) seriell zu der Serienschaltung der Schaltzellen aufweist,

**dadurch gekennzeichnet,**

**dass** bezüglich eines jeden Phasenbausteins (1) der Ansteuerschaltung (3) zur Bildung des Ansteuersignals (S1) die Differenz aus einem Referenzsignal ($V_{ref,UR}$, $V_{ref,US}$, $V_{ref,UT}$, $V_{ref,VR}$, $V_{ref,VS}$, $V_{ref,VT}$, $v_{ref,WR}$, $V_{ref,WS}$, $V_{ref,WT}$) bezüglich der Spannung ($U_{UR}$, $U_{US}$, $U_{UT}$; $U_{VR}$, $U_{VS}$, $U_{VT}$; $U_{WR}$, $U_{WS}$, $U_{WT}$) über dem Phasenbaustein (1) und aus einem Spannungssignal ($V_{LUR}$, $V_{LUS}$, $V_{LUT}$, $V_{LVR}$, $V_{LVS}$, $V_{LVT}$, $V_{LWR}$, $V_{LWS}$, $V_{LWT}$) über der Induktivität ($L_{UR}$, $L_{US}$, $L_{UT}$; $L_{VR}$, $L_{VS}$, $L_{VT}$; $L_{WR}$, $L_{WS}$, $L_{WT}$) zugeführt ist,

**dass** für sämtliche Phasenbausteine (1) eine gemeinsame erste Berechnungseinheit (4) zur Bildung des Spannungssignals ($V_{LUR}$, $V_{LUS}$, $V_{LUT}$, $V_{LVR}$, $V_{LVS}$, $V_{LVT}$, $V_{LWR}$, $V_{LWS}$, $V_{LWT}$) über der Induktivität ($L_{UR}$, $L_{US}$, $L_{UT}$; $L_{VR}$, $L_{VS}$, $L_{VT}$; $L_{WR}$, $L_{WS}$, $L_{WT}$) aus einem Referenzsignal ($i_{ref,UR}$, $i_{ref,US}$, $i_{ref,UT}$, $i_{ref,VR}$, $i_{ref,VS}$ $i_{ref,VT}$, $i_{ref,WR}$, $i_{ref,WS}$, $i_{ref,WT}$) bezüglich des Stromes ($i_{UR}$, $i_{US}$, $i_{UT}$; $i_{VR}$, $i_{VS}$, $i_{VT}$; $i_{WR}$, $i_{WS}$, $i_{WT}$) durch den Phasenbaustein (1) vorgesehen ist und

**dass** für sämtliche Phasenbausteine (1) eine gemeinsame zweite Berechnungseinheit zur Bildung des Referenzsignals ($i_{ref,UR}$, $i_{ref,US}$, $i_{ref,UT}$, $i_{ref,VR}$, $i_{ref,VS}$, $i_{ref,VT}$, $i_{ref,WR}$, $i_{ref,WS}$, $i_{ref,WT}$) bezüglich des Stromes ($i_{UR}$, $i_{US}$, $i_{UT}$; $i_{VR}$, $i_{VS}$, $i_{VT}$; $i_{WR}$, $i_{WS}$, $i_{WT}$) durch den Phasenbaustein (1) aus einem Mittelwert ($\overline{P}_U$, $\overline{P}_V$, $\overline{P}_W$) oder Augenblickswert ($P_U$, Pv, $P_W$) einer Phasenleistung einer an den Phasenbaustein (1) angeschlossenen Phase (U, V, W) des ersten Strom- oder Spannungssystems, aus einem Mittelwert ($\overline{P}_R$, $\overline{P}_S$, $\overline{P}_T$) oder Augenblickswert ($P_R$, $P_S$, $P_T$) einer Phasenleistung einer an den Phasenbaustein (1) angeschlossenen Phase (R, S, T) des zweiten Strom- oder Spannungssystems, aus der Summe der Augenblickswerte ($P_{UVW}$) oder der Mittelwerte ($P_{UVWM}$) der Phasenleistungen der Phasen (U, V, W) des ersten Strom- oder Spannungssystems und aus der Summe der Augenblickswerte ($P_{RST}$) oder der Mittelwerte ($P_{RSTM}$) der Phasenleistungen der Phasen (R, S, T) des zweiten Strom- oder Spannungssystems vorgesehen ist.

6. Vorrichtung nach Anspruch 5, **dadurch gekennzeichnet, dass** die gemeinsame zweite Berechnungseinheit das Referenzsignal ($i_{ref,UR}$, $i_{ref,US}$, $i_{ref,UT}$, $i_{ref,VR}$, $i_{ref,VS}$, $i_{ref,VT}$, $i_{ref,WR}$, $i_{ref,WS}$, $i_{ref,WT}$) bezüglich des Stromes ($i_{UR}$, $i_{US}$, $i_{UT}$; $i_{VR}$, $i_{VS}$, $i_{VT}$; $i_{WR}$, $i_{WS}$, $i_{WT}$) durch den Phasenbaustein (1) zusätzlich aus einem Phasenstrom ($i_U$, $i_V$, $i_W$) der an den Phasenbaustein (1) angeschlossenen Phase (U,V, W) des ersten Strom- oder Spannungssystems und aus einem Phasenstrom ($i_R$, $i_S$, $i_T$) der an den Phasenbaustein (1) angeschlossenen Phase (R, S, T) des zweiten Strom- oder Spannungssystems bildet.

7. Vorrichtung nach Anspruch 6, **dadurch gekennzeichnet, dass** für sämtliche Phasenbausteine (1) eine gemeinsame dritte Berechnungseinheit (6) zur Bildung des Augenblickswertes der Phasenleistung ($P_U$, $P_V$, $P_W$) der an den Phasenbaustein (1) angeschlossenen Phase (U,V, W) des ersten Strom- oder Spannungssystems aus einem Referenzsignal ($i_{ref,U}$, $I_{ref,V}$, $I_{ref,W}$) bezüglich des Phasenstromes ($i_U$, $i_V$, $i_W$) der an den Phasenbaustein (1) angeschlossenen Phase (U, V, W) des ersten Strom- oder Spannungssystems und aus einem Referenzsignal ($V_{ref,U}$, $V_{ref,V}$, $V_{ref,W}$) bezüglich einer Phasenspannung ($U_U$, $U_V$, $U_W$) der an den Phasenbaustein (1) angeschlossenen Phase (U,V, W) des ersten Strom- oder Spannungssystems und zur Bildung des Augenblickswertes der Phasenleistung ($P_R$, $P_S$, $P_T$) der an den Phasenbaustein (1) angeschlossenen Phase (R, S, T) des zweiten Strom- oder Spannungssystems aus einem Referenzsignal ($I_{ref,R}$, $i_{ref,S}$, $I_{ref,T}$) bezüglich des Phasenstromes ($i_R$, $i_S$, $i_T$) der an den Phasenbaustein (1) angeschlossenen Phase (R, S, T) des zweiten Strom- oder Spannungssystems und aus einem Referenzsignal ($V_{ref,R}$, $V_{ref,S}$, $V_{ref,T}$) bezüglich einer Phasenspannung ($U_R$, $U_S$, $U_T$) der an den Phasenbaustein (1) angeschlossenen Phase (R, S, T) des zweiten Strom- oder Spannungssystems vorgesehen ist.

8. Vorrichtung nach Anspruch 6, **dadurch gekennzeichnet, dass** für sämtliche Phasenbausteine (1) eine gemeinsame dritte Berechnungseinheit (6) zur Bildung des Augenblickswertes der Phasenleistung ($P_U$, $P_V$, $P_W$) der an den Phasenbaustein (1) angeschlossenen Phase (U,V, W) des ersten Strom- oder aus einem Phasenstrom ($i_U$, $i_V$, $i_W$) der an den Phasenbaustein (1) angeschlossenen Phase (U, V, W) des ersten Strom- oder Spannungssystems und aus einer Phasenspannung ($u_U$, $u_V$, $u_W$) der an den Phasenbaustein (1) angeschlossenen Phase (U, V, W) des ersten Strom- oder Spannungssystems und zur Bildung des Augenblickswertes der Phasenleistung ($P_R$, $P_S$, $P_T$) der an den Phasenbaustein (1) angeschlossenen Phase (R, S, T) des zweiten Strom- oder Spannungssystems aus einem Phasenstrom ($i_R$, $i_S$ $i_T$) der an den Phasenbaustein (1) angeschlossenen Phase (R, S, T) des zweiten Strom- oder Spannungssystems und aus einer Phasenspannung ($u_R$, $u_S$, $u_T$) der an den Phasenbaustein (1) angeschlossenen Phase (R, S, T) des zweiten Strom- oder Spannungssystems vorgesehen ist.

## Claims

1. Method for operating a direct converter circuit, wherein the direct converter circuit has at least two phase modules (1) and serves to connect phases (U, V, W) of a first current system or voltage system with phases (R, S, T) of a second current system or voltage system, each phase module (1) comprises a plurality of two-pole switching cells (2) connected in series with one another, and each switching cell (2) has controllable two-way power semiconductor switches with a controlled one-way current-carrying direction and a capacitive energy store,
in which the power semiconductor switches of the switching cells (2) of the associated phase module (1) are controlled by means of a control signal (S1) and each phase module (1) has an inductor ($L_{UR}$, $L_{US}$, $L_{UT}$; $L_{VR}$, $L_{VS}$, $L_{VT}$; $L_{WR}$, $L_{WS}$, $L_{WT}$) in series with the series circuit of the switching cells, **characterized in that**, for each phase module (1), the control signal (S1) is formed from the difference between a reference signal ($V_{ref,UR}$, $V_{ref,US}$, $V_{ref,UT}$, $V_{ref,VR}$, $V_{ref,VS}$, $V_{ref,VT}$, $V_{ref,NR}$, $V_{ref,WS}$, $V_{ref,WT}$) in relation to the voltage ($U_{UR}$, $U_{US}$, $U_{UT}$; $U_{VR}$, $U_{VS}$, $U_{VT}$; $U_{WR}$, $U_{WS}$, $U_{WT}$) over the phase module (1) and a voltage signal ($V_{LUR}$, $V_{LUS}$, $V_{LUT}$, $V_{LVR}$, $V_{LVS}$, $V_{LVT}$, $V_{LWR}$, $V_{LWS}$, $V_{LWT}$) over the inductor ($L_{UR}$, $L_{US}$, $L_{UT}$; $L_{VR}$, $L_{VS}$, $L_{VT}$; $L_{WR}$, $L_{WS}$, $L_{WT}$), and
that the voltage signal ($V_{LUR}$, $V_{LUS}$, $V_{LUT}$, $V_{LVR}$, $V_{LVS}$, $V_{LVT}$, $V_{LWR}$, $V_{LWS}$, $V_{LWT}$) over the inductor ($L_{UR}$, $L_{US}$, $L_{UT}$; $L_{VR}$, $L_{VS}$, $L_{VT}$; $L_{WR}$, $L_{WS}$, $L_{WT}$) is formed from a reference signal ($i_{ref,UR}$, $i_{ref,US}$, $i_{ref,UT}$, $i_{ref,VR}$, $i_{ref,VS}$, $i_{ref,VT}$, $i_{ref,WR}$, $i_{ref,WS}$, $i_{ref,WT}$) in relation to the current ($i_{UR}$, $i_{US}$, $i_{UT}$; $i_{VR}$, $i_{VS}$, $i_{VT}$; $i_{WR}$, $i_{WS}$, $i_{WT}$) through the phase module (1), and
that the reference signal ($i_{ref,URP}$ $i_{ref,US}$, $i_{ref,UT}$, $i_{ref,VR}$, $i_{ref,VS}$, $i_{ref,VT}$, $i_{ref,WR}$, $i_{ref,WS}$, $i_{ref,WT}$) in relation to the current ($i_{UR}$, $i_{US}$, $i_{UT}$; $i_{VR}$, $i_{VS}$, $i_{VT}$; $i_{WR}$, $I_{WS}$, $i_{WT}$) through the phase module (1) is formed from a mean value ($\overline{P}_U$, $\overline{P}_V$, $\overline{P}_W$) or instantaneous value ($P_U$, $P_V$, Pw) of a phase power of a phase (U, V, W) of the first current system or voltage system connected to the phase module (1), from a mean value ($\overline{P}_R$, $\overline{P}_S$, $\overline{P}_T$) or instantaneous value ($P_R$, $P_S$, $P_T$) of a phase power of a phase (R, S, T) of the second current system or voltage system connected to the phase module (1), from the sum of the instantaneous values ($P_{UVW}$) or of the mean values ($P_{UVWM}$) of the phase powers of the phases (U, V, W) of the first current system or voltage system and from the sum of the instantaneous values ($P_{RST}$) or of the mean values ($P_{RSTM}$) of the phase powers of the phases (R, S, T) of the second current system or voltage system.

2. Method according to Claim 1, **characterized in that**, for each phase module (1), the reference signal ($i_{ref,UR}$, $i_{ref,US}$, $i_{ref,UT}$, $i_{ref,VR}$, $i_{ref,VS}$, $i_{ref,VT}$, $i_{ref,WR}$, $i_{ref,WS}$, $i_{ref,WT}$) in relation to the current ($i_{UR}$, $i_{US}$, $i_{UT}$; $i_{VR}$, $i_{VS}$, $i_{VT}$; $I_{WR}$, $i_{WS}$, $i_{WT}$) through the phase module (1) is additionally formed from a phase current ($i_U$, iv, $i_W$) of the phase (U, V, W) of the first current system or voltage system connected to the phase module (1) and from a phase current ($i_R$, $i_S$, $i_T$) of the phase (R, S, T) of the second current system or voltage system connected to the phase module (1).

3. Method according to Claim 2, **characterized in that**, for each phase module (1), the instantaneous value of the phase power ($P_U$, $P_V$, $P_W$) of the phase (U, V, W) of the first current system or voltage system connected to the phase module (1) is formed from a reference signal ($I_{ref,U}$, $I_{ref,V}$, $I_{ref,W}$) in relation to the phase current ($i_U$, $i_V$, $i_W$) of the phase (U, V, W) of the first current system or voltage system connected to the phase module (1) and from a reference signal ($V_{ref,U}$, $V_{ref,V}$, $V_{ref,W}$) in relation to a phase voltage ($U_U$, $U_V$, $U_W$) of the phase (U, V, W) of the first current system or voltage system connected to the phase module (1), and

that the instantaneous value of the phase power ($P_R$, $P_S$, $P_T$) of the phase (R, S, T) of the second current system or voltage system connected to the phase module (1) is formed from a reference signal ($I_{ref,R}$, $I_{ref,S}$, $I_{ref,T}$) in relation to the phase current ($i_R$, $i_S$, $i_T$) of the phase (R, S, T) of the second current system or voltage system connected to the phase module (1) and from a reference signal ($V_{ref,R}$, $V_{ref,S}$, $V_{ref,T}$) in relation to a phase voltage ($U_R$, $U_S$, $U_T$) of the phase (R, S, T) of the second current system or voltage system connected to the phase module (1).

4. Method according to Claim 2, **characterized in that**, for each phase module (1), the instantaneous value of the phase power ($P_U$, $P_V$, $P_W$) of the phase (U, V, W) of the first current system or voltage system connected to the phase module (1) is formed from a phase current ($i_U$, $i_V$, $i_W$) of the phase (U, V, W) of the first current system or voltage system connected to the phase module (1) and from a phase voltage ($u_U$, $u_V$, $u_W$) of the phase (U, V, W) of the first current system or voltage system connected to the phase module (1), and

that the instantaneous value of the phase power ($P_R$, $P_S$, $P_T$) of the phase (R, S, T) of the second current system or voltage system connected to the phase module (1) is formed from a phase current ($i_R$, $i_S$ $i_T$) of the phase (R, S, T) of the second current system or voltage system connected to the phase module (1) and from a phase voltage ($u_R$, $u_S$, $u_T$) of the phase (R, S, T) of the second current system or voltage system connected to the phase module (1).

5. Device to carry out a method for operating a direct converter circuit, wherein the direct converter circuit has at least two phase modules (1) and serves to connect phases (U, V, W) of a first current system or voltage system with phases (R, S, T) of a second current system or voltage system, each phase module (1) comprises a plurality of two-pole switching cells (2) connected in series with one another, and each switching cell (2) has controllable two-way power semiconductor switches with a controlled one-way current-carrying direction and a capacitive energy store, with a control circuit (3) for each phase module (1) serving to generate a control signal (S1), said control circuit (3) being connected to the power semiconductor switches of the switching cells (2) of the phase module (1), and each phase module (1) has an inductor ($L_{UR}$, $L_{US}$, $L_{UT}$; $L_{VR}$, $L_{VS}$, $L_{VT}$; $L_{WR}$, $L_{WS}$, $L_{WT}$) in series with the series circuit of the switching cells,

**characterized in that**, in relation to each phase module (1), the difference between a reference signal ($V_{ref,UR}$, $V_{ref,US}$, $V_{ref,UT}$, $V_{ref,VR}$, $V_{ref,VS}$, $V_{ref,VT}$, $V_{ref,WR}$, $V_{ref,WS}$, $V_{ref,WT}$) in relation to the voltage ($U_{UR}$, $U_{US}$, $U_{UT}$; $U_{VR}$, $U_{VS}$, $U_{VT}$; $U_{WR}$, $U_{WS}$, $U_{WT}$) over the phase module (1) and a voltage signal ($V_{LUR}$, $V_{LUS}$, $V_{LUT}$, $V_{LVR}$, $V_{LVS}$, $V_{LVT}$, $V_{LWR}$, $V_{LWS}$, $V_{LWT}$) over the inductor ($L_{UR}$, $L_{US}$, $L_{UT}$; $L_{VR}$, $L_{VS}$, $L_{VT}$; $L_{WR}$, $L_{WS}$, $L_{WT}$) is fed to the control circuit (3) to form the control signal (S1),

that, for all phase modules (1), a common first calculation unit (4) is provided to form the voltage signal ($V_{LUR}$, $V_{LUS}$, $V_{LUT}$, $V_{LVR}$, $V_{LVS}$, $V_{LVT}$, $V_{LWR}$, $V_{LWS}$, $V_{LWT}$) over the inductor ($L_{UR}$, $L_{US}$, $L_{UT}$; $L_{VR}$, $L_{VS}$, $L_{VT}$; $L_{WR}$, $L_{WS}$, $L_{WT}$) from a reference signal ($i_{ref,UR}$, $i_{ref,US}$, $i_{ref,UT}$, $i_{ref,VR}$, $i_{ref,VS}$, $i_{ref,VT}$, $i_{ref,WR}$, $i_{ref,WS}$, $i_{ref,WT}$) in relation to the current ($i_{UR}$, $i_{US}$, $i_{UT}$; $i_{VR}$, $i_{VS}$, $i_{VT}$; $i_{WR}$, $i_{WS}$, $i_{WT}$) through the phase module (1), and that, for all phase modules (1), a common second calculation unit is provided to form the reference signal ($i_{ref,UR}$, $i_{ref,US}$, $i_{ref,UT}$, $i_{ref,VR}$, $i_{ref,VS}$, $i_{ref,VT}$, $i_{ref,WR}$, $i_{ref,WS}$, $i_{ref,WT}$) in relation to the current ($i_{UR}$, $i_{US}$, $i_{UT}$; $i_{VR}$, $i_{VS}$, $i_{VT}$; $i_{WR}$, $i_{WS}$, $i_{WT}$) through the phase module (1) from a mean value ($\overline{P}_U$, $\overline{P}_V$, $\overline{P}_W$) or instantaneous value ($P_U$, $P_V$, $P_W$) of a phase power of a phase (U, V, W) of the first current system or voltage system connected to the phase module (1), from a mean value ($\overline{P}_R$, $\overline{P}_S$, $\overline{P}_T$) or instantaneous value ($P_R$, $P_S$, $P_T$) of a phase power of a phase (R, S, T) of the second current system or voltage system connected to the phase module (1), from the sum of the instantaneous values ($P_{UVW}$) or of the mean values ($P_{UVWM}$) of the phase powers of the phases (U, V, W) of the first current system or voltage system and from the sum of the instantaneous values ($P_{RST}$) or of the mean values ($P_{RSTM}$) of the phase powers of the phases (R, S, T) of the second current system or voltage system.

6. Device according to Claim 5, **characterized in that** the common second calculation unit forms the reference signal ($i_{ref,UR}$, $i_{ref,US}$, $i_{ref,UT}$, $i_{ref,VR}$, $i_{ref,VS}$, $i_{ref,VT}$, $i_{ref,WR}$, $i_{ref,WS}$, $i_{ref,WT}$) in relation to the current ($i_{UR}$, $i_{US}$, $i_{UT}$; $i_{VR}$, $i_{VS}$, $i_{VT}$; $i_{WR}$, $i_{WS}$, $i_{WT}$) through the phase module (1) additionally from a phase current ($i_U$, $i_V$, $i_W$) of the phase (U, V, W) of the first current system or voltage system connected to the phase module (1) and from a phase current ($i_R$, $i_S$, $i_T$) of the phase (R, S, T) of the second current system or voltage system connected to the phase module (1).

7. Device according to Claim 6, **characterized in that**, for all phase modules (1), a common third calculation unit (6) is provided to form the instantaneous value of the phase power ($P_U$, $P_V$, $P_W$) of the phase (U, V, W) of the first current system or voltage system connected to the phase module (1) from a reference signal ($I_{ref,U}$, $I_{ref,V}$, $I_{ref,W}$) in relation to the phase current ($i_U$, $i_V$, $i_W$) of the phase (U, V, W) of the first current system or voltage system connected to the phase module (1) and from a reference signal ($V_{ref,U}$, $V_{ref,V}$, $U_W$) of the phase (U, V, W) of the first current system or voltage system connected to the phase module (1) and to form the instantaneous value of the phase power ($P_R$, $P_S$, $P_T$) of the phase (R, S, T) of the second current system or voltage system connected to the phase module (1) from a reference signal ($I_{ref,R}$, $I_{ref,S}$, $I_{ref,T}$) in relation to the phase current ($i_R$, $i_S$, $i_T$) of the phase (R, S, T) of the second current system or voltage system connected to the phase module (1) and from a reference signal ($V_{ref,R}$, $V_{ref,S}$, $V_{ref,T}$) in relation to a phase voltage ($U_R$, $U_S$, $U_T$) of the phase (R, S, T) of the second current system or voltage system connected to the phase module (1).

8. Device according to Claim 6, **characterized in that**, for all phase modules (1), a common third calculation unit (6) is provided to form the instantaneous value of the phase power ($P_U$, $P_V$, $P_W$) of the phase (U, V, W) of the first current system or voltage system connected to the phase module (1) from a phase current ($i_U$, $i_V$, $i_W$) of the phase (U, V, W) of the first current system or voltage system and from a phase voltage ($u_U$, $u_V$, $u_W$) of the phase (U, V, W) of the first current system or voltage system connected to the phase module (1) and to form the instantaneous value of the phase power ($P_R$, $P_S$, $P_T$) of the phase (R, S, T) of the second current system or voltage system connected to the phase module (1) from a phase current ($i_R$, $i_S$ $i_T$) of the phase (R, S, T) of the second current system or voltage system connected to the phase module (1) and from a phase voltage ($u_R$, $u_S$, $u_T$) of the phase (R, S, T) of the second current system or voltage system connected to the phase module (1).

**Revendications**

1. Procédé de mise en fonctionnement d'un circuit convertisseur direct, dans lequel le circuit convertisseur direct comporte au moins deux composants de phase (1) et sert à connecter des phases (U, V, W) d'un premier système de courant ou de tension à des phases (R, S, T) d'un deuxième système de courant ou de tension, chaque composant de phase (1) comprend une pluralité de cellules de commutation (2) bipolaires connectées les unes aux autres en série et chaque cellule de commutation (2) comporte des commutateurs à semi-conducteurs de puissance bidirectionnels présentant une direction de passage du courant unidirectionnelle commandée et un dispositif de stockage d'énergie capacitif,

dans lequel les commutateurs à semi-conducteurs de puissance des cellules de commutation (2) du composant de phase (1) associé sont attaqués au moyen d'un signal d'attaque (S1) et chaque composant de phase (1) comporte une inductance ($L_{UR}$, $L_{US}$, $L_{UT}$ ; $L_{VR}$, $L_{VS}$, $L_{VT}$ ; $L_{WR}$, $L_{WS}$, $L_{WT}$) en série par rapport au circuit série des cellules de commutation,

**caractérisé en ce que**, pour chaque composant de phase (1), le signal d'attaque (S1) est établi à partir de la différence d'un signal de référence ($V_{ref,UR}$, $V_{ref,US}$, $V_{ref,UT}$, $V_{ref,VR}$, $V_{ref,VS}$, $V_{ref,VT}$, $V_{ref,WR}$, $V_{ref,WS}$, $V_{ref,WT}$) par rapport à la tension ($U_{UR}$, $U_{US}$, $U_{UT}$ ; $U_{VR}$, $U_{VS}$, $U_{VT}$ ; $U_{WR}$, $U_{WS}$, $U_{WT}$) aux bornes du composant de phase (1) et d'un signal de tension ($V_{LUR}$, $V_{LUS}$, $V_{LUT}$, $V_{LVR}$, $V_{LVS}$, $V_{LVT}$, $V_{LWR}$, $V_{LWS}$, $V_{LWT}$) aux bornes de l'inductance ($L_{UR}$, $L_{US}$, $L_{UT}$ ; $L_{VR}$, $L_{VS}$, $L_{VT}$ ; $L_{WR}$, $L_{WS}$, $L_{WT}$), et

**en ce que** le signal de tension ($V_{LUR}$, $V_{LUS}$, $V_{LUT}$, $V_{LVR}$, $V_{LVS}$, $V_{LVT}$, $V_{LWR}$, $V_{LWS}$, $V_{LWT}$) aux bornes de l'inductance ($L_{UR}$, $L_{US}$, $L_{UT}$ : $L_{VR}$, $L_{VS}$, $L_{VT}$ ; $L_{WR}$, $L_{WS}$, $L_{WT}$) est établi à partir d'un signal de référence ($i_{ref,UR}$, $i_{ref,US}$, $i_{ref,UT}$, $i_{ref,VR}$, $i_{ref,VS}$, $i_{ref,VT}$, $i_{ref,WR}$, $i_{ref,WS}$, $i_{ref,WT}$) par rapport au courant ($i_{UR}$, $I_{US}$, $i_{UT}$ ; $i_{VR}$, $i_{VS}$, $i_{VT}$ ; $i_{WR}$, $i_{WS}$, $i_{WT}$) passant à travers le composant de phase (1) et

**en ce que** le signal de référence ($i_{ref,UR}$, $i_{ref,US}$, $i_{ref,UT}$, $i_{ref,VR}$, $i_{ref,VS}$, $i_{ref,VT}$, $i_{ref,WF}$, $i_{ref,WS}$, $i_{ref,WT}$) par rapport au courant ($i_{UR}$, $i_{US}$, $i_{UT}$ ; $I_{VR}$, $I_{VS}$, $i_{VT}$ ; $i_{WR}$, $i_{WS}$, $i_{WT}$) passant à travers le composant de phase (1) est établi à partir d'une valeur moyenne ($\bar{P}_U$, $\bar{P}_V$, $\bar{P}_W$) ou d'une valeur instantanée ($P_U$, Pv, Pw) d'une puissance de phase d'une phase (U, V, W) raccordée au composant de phase (1) du premier système de courant ou de tension, à partir d'une valeur moyenne ($P_R$, $P_S$, $P_T$) ou d'une valeur instantanée ($P_R$, $P_S$, $P_T$) d'une puissance de phase d'une phase (R, S, T) raccordée au composant de phase (1) du deuxième système de courant ou de tension, à partir de la somme des valeurs instantanées ($P_{UVW}$) ou des valeurs moyennes ($P_{UVWM}$) des puissances de phase des phases (U, V, W) du premier système de courant ou de tension et à partir de la somme des valeurs instantanées ($P_{RST}$) ou des valeurs moyennes ($P_{FSTM}$) des puissances de phase des phases (R, S, T) du deuxième système de courant ou de tension.

**2.** Procédé selon la revendication 1, **caractérisé en ce que**, pour chaque composant de phase (1), le signal de référence ($i_{ref,UR}$, $i_{ref,US}$, $i_{ref,UT}$, $i_{ref,VR}$, $i_{ref,VS}$, $i_{ref,VT}$, $i_{ref,WR}$, $i_{ref,WS}$, $i_{ref,WT}$) par rapport au courant ($i_{UR}$, $i_{US}$, $i_{UT}$ ; $I_{VR}$, $i_{VS}$, $i_{VT}$ ; $i_{WR}$, $i_{WS}$, $i_{WT}$) passant à travers le composant de phase (1) est en outre établi à partir d'un courant de phase ($i_U$, $i_V$, $i_W$) de la phase (U, V, W) raccordée au composant de phase (1) du premier système de courant ou de tension et à partir d'un courant de phase ($i_R$, $i_S$, $i_T$) de la phase (R, S, T) raccordée au composant de phase (1) du deuxième système de courant ou de tension.

**3.** Procédé selon la revendication 2, **caractérisé en ce que**, pour chaque composant de phase (1), la valeur instantanée de la puissance de phase ($P_U$, $P_V$, $P_W$) de la phase (U, V, W) raccordée au composant de phase (1) du premier système de courant ou de tension est établie à partir d'un signal de référence ($I_{ref,U}$, $I_{ref,V}$, $I_{ref,W}$) par rapport au courant de phase ($i_U$, $i_V$, $i_W$) de la phase (U, V, W) raccordée au composant de phase (1) du premier système de courant ou de tension et à partir d'un signal de référence ($V_{ref,U}$, $V_{ref,V}$, $V_{ref,W}$) par rapport à une tension de phase ($U_U$, $U_V$, $U_W$) de la phase (U, V, W) raccordée au composant de phase (1) du premier système de courant ou de tension, et **en ce que** la valeur instantanée de la puissance de phase ($P_R$, $P_S$, $P_T$) de la phase (R, S, T) raccordée au composant de phase (1) du deuxième système de courant ou de tension est établie à partir d'un signal de référence ($I_{ref,R}$, $I_{ref,S}$, $I_{ref,T}$) par rapport au courant de phase ($i_R$, $i_S$, $i_T$) de la phase (R, S, T) raccordée au composant de phase (1) du deuxième système de courant ou de tension et à partir d'un signal de référence ($V_{ref,R}$, $V_{ref,S}$, $V_{ref,T}$) par rapport à une tension de phase ($U_R$, $U_S$, $U_T$) de la phase (R, S, T) raccordée au composant de phase (1) du deuxième système de courant ou de tension.

**4.** Procédé selon la revendication 2, **caractérisé en ce que**, pour chaque composant de phase (1), la valeur instantanée de la puissance de phase ($P_U$, $P_V$, $P_W$) de la phase (U, V, W) raccordée au composant de phase (1) du premier système de courant ou de tension est établie à partir d'un courant de phase ($i_U$, $i_V$, $i_W$) de la phase (U, V, W) raccordée au composant de phase (1) du premier système de courant ou de tension et à partir d'une tension de phase ($u_U$, $u_V$, $u_W$) de la phase (U, V, W) raccordée au composant de phase (1) du premier système de courant ou de tension, et **en ce que** la valeur instantanée de la puissance de phase ($P_R$, $P_S$, $P_T$) de la phase (R, S, T) raccordée au composant de phase (1) du deuxième système de courant ou de tension est établie à partir d'un courant de phase ($i_R$, $i_S$, $i_T$) de la phase (R, S, T) raccordée au composant de phase (1) du deuxième système de courant ou de tension et à partir d'une tension de phase ($u_R$, $u_S$, $u_T$) de la phase (R, S, T) raccordée au composant de phase (1) du deuxième système de courant ou de tension.

**5.** Dispositif destiné à mettre en oeuvre un procédé de mise en fonctionnement d'un circuit convertisseur direct, dans lequel le circuit convertisseur direct comporte au moins deux composants de phase (1) et sert à connecter des phases (U, V, W) d'un premier système de courant ou de tension à des phases (R, S, T) d'un deuxième système de courant ou de tension, chaque composant de phase (1) comprend une pluralité de cellules de commutation (2) bipolaires connectées les unes aux autres en série et chaque cellule de commutation (2) comporte des commutateurs à semi-conducteurs de puissance bidirectionnels pouvant être attaqués présentant une direction de passage du courant unidirectionnelle commandée et un dispositif de stockage d'énergie capacitif, comportant un circuit d'attaque (3) servant à générer un signal d'attaque (S1) pour chaque composant de phase (1), lequel circuit d'attaque (3) est connecté aux commutateurs à semi-conducteurs de puissance des cellules de commutation (2) du composant de phase (1) et chaque composant de phase (1) comporte une inductance ($L_{UR}$, $L_{US}$, $L_{UT}$ ; $L_{VR}$, $L_{VS}$, $L_{VT}$ ; $L_{WR}$, $L_{WS}$, $L_{WT}$) en série par rapport au circuit série des cellules de commutation, **caractérisé en ce que**, par rapport à chaque composant de phase respectif (1) du circuit d'attaque (3), pour établir le signal d'attaque (S1), la différence est fournie à partir d'un signal de référence ($V_{ref,UR}$, $V_{ref,US}$, $V_{ref,UT}$, $V_{ref,VR}$, $V_{ref,VS}$, $V_{ref,VT}$, $V_{ref,WF}$, $V_{ref,WS}$, $V_{ref,WT}$) par rapport à la tension ($U_{UR}$, $U_{US}$, $U_{UT}$ ; $U_{VR}$, $U_{VS}$, $U_{VT}$ ; $U_{WR}$, $U_{WS}$, $U_{WT}$) aux bornes du composant de phase (1) et d'un signal de tension ($V_{LUR}$, $V_{LUS}$, $V_{LUT}$, $V_{LVR}$, $V_{LVS}$, $V_{LVT}$, $V_{LWR}$, $V_{LWS}$, $V_{LWT}$) aux bornes de l'inductance ($L_{UR}$, $L_{US}$, $L_{UT}$ ; $L_{VR}$, $L_{VS}$, $L_{VT}$ ; $L_{WR}$, $L_{WS}$, $L_{WT}$), **en ce que**, pour tous les composants de phase (1), il est prévu une première unité de calcul commune (4) destinée à établir le signal de tension ($V_{LUR}$, $V_{LUS}$, $V_{LUT}$, $V_{LVR}$, $V_{LVS}$, $V_{LVT}$, $V_{LWR}$, $V_{LWS}$, $V_{LWT}$) aux bornes de l'inductance ($L_{UR}$, $L_{US}$, $L_{UT}$ ; $L_{VR}$, $L_{VS}$, $L_{VT}$ ; $L_{WR}$, $L_{WS}$, $L_{WT}$) à partir d'un signal de référence ($i_{ref,UR}$, $i_{ref,US}$, $i_{ref,UT}$, $i_{ref,VR}$, $i_{ref,VS}$, $i_{ref,VT}$, $i_{ref,WR}$, $i_{ref,WS}$, $i_{ref,NT}$) par rapport au courant ($i_{UR}$, $i_{US}$, $i_{UT}$ ; $i_{VR}$, $i_{VS}$, $i_{VT}$ ; $i_{WR}$, $i_{WS}$, $i_{WT}$) passant à travers le composant de phase (1) et **en ce que**, pour tous les composants de phase (1), il est prévu une deuxième unité de calcul commune (4) destinée à établir le signal de référence ($i_{ref,UR}$, $i_{ref,US}$, $i_{ref,UT}$, $i_{ref,VR}$, $i_{ref,VS}$, $i_{ref,VT}$, $i_{ref,WR}$, $i_{ref,WS}$, $i_{ref,WT}$) par rapport au courant ($i_{UR}$, $i_{US}$, $i_{UT}$ ; $i_{VR}$, $I_{VS}$, $i_{VT}$ ; $i_{WR}$, $i_{WS}$, $i_{WT}$) passant à travers le composant de phase (1) à partir d'une valeur moyenne

($\overline{P}_U$, $\overline{P}_V$, $\overline{P}_W$) ou d'une valeur instantanée (Pu, $P_V$, $P_W$) d'une puissance de phase d'une phase (U, V, W) raccordée au composant de phase (1) du premier système de courant ou de tension, à partir d'une valeur moyenne ($\overline{P}_R$, $\overline{P}_S$, $\overline{P}_T$) ou d'une valeur instantanée ($P_R$, $P_S$, $P_T$) d'une puissance de phase d'une phase (R, S, T) raccordée au composant de phase (1) du deuxième système de courant ou de tension, à partir de la somme des valeurs instantanées ($P_{UVW}$) ou des valeurs moyennes ($P_{UVWM}$) des puissances de phase des phases (U, V, W) du premier système de courant ou de tension et à partir de la somme des valeurs instantanées ($P_{RST}$) ou des valeurs moyennes ($P_{RSTM}$) des puissances de phase des phases (R, S, T) du deuxième système de courant ou de tension.

6. Dispositif selon la revendication 5, **caractérisé en ce que** la deuxième unité de calcul commune établit en outre le signal de référence ($i_{ref,UR}$, $i_{ref,US}$, $i_{ref,UT}$, $i_{ref,VR}$, $i_{ref,VS}$, $i_{ref,VT}$, $i_{ref,WR}$, $i_{ref,WS}$, $i_{ref,WT}$) par rapport au courant ($I_{UR}$, $i_{US}$, $i_{UT}$ ; $i_{VR}$, $i_{VS}$, $i_{VT}$ ; $i_{WR}$, $i_{WS}$, $i_{WT}$) passant à travers le composant de phase (1) à partir d'un courant de phase ($i_U$, $i_V$, $i_W$) de la phase (U, V, W) raccordée au composant de phase (1) du premier système de courant ou de tension et à partir d'un courant de phase ($i_R$, $i_S$, $i_T$) de la phase (R, S, T) raccordée au composant de phase (1) du deuxième système de courant ou de tension.

7. Dispositif selon la revendication 6, **caractérisé en ce que**, pour tous les composants de phase (1), il est prévu une troisième unité de calcul commune (6) destinée à établir la valeur instantanée de la puissance de phase (Pu, Pv, Pw) de la phase (U, V, W) raccordée au composant de phase (1) du premier système de courant ou de tension à partir d'un signal de référence ($I_{ref,U}$, $I_{ref,V}$, $I_{ref,W}$) par rapport au courant de phase ($i_U$, $i_V$, $i_W$) de la phase (U, V, W) raccordée au composant de phase (1) du premier système de courant ou de tension et à partir d'un signal de référence ($V_{ref,U}$, $V_{ref,V}$, $V_{ref,W}$) par rapport à une tension de phase ($U_U$, $U_V$, $U_W$) de la phase (U, V, W) raccordée au composant de phase (1) du premier système de courant ou de tension, et destinée à établir la valeur instantanée de la puissance de phase ($P_R$, $P_S$, $P_T$) de la phase (R, S, T) raccordée au composant de phase (1) du deuxième système de courant ou de tension à partir d'un signal de référence ($I_{ref,R}$, $I_{ref,S}$, $I_{ref,T}$) par rapport au courant de phase ($i_R$, $i_S$, $i_T$) de la phase (R, S, T) raccordée au composant de phase (1) du deuxième système de courant ou de tension et à partir d'un signal de référence ($V_{ref,R}$, $V_{ref,S}$, $V_{ref,T}$) par rapport à une tension de phase ($U_R$, $U_S$, $U_T$) de la phase (R, S, T) raccordée au composant de phase (1) du deuxième système de courant ou de tension.

8. Dispositif selon la revendication 6, **caractérisé en ce que**, pour tous les composants de phase (1), il est prévu une troisième unité de calcul commune (6) destinée à établir la valeur instantanée de la puissance de phase (Pu, Pv, Pw) de la phase (U, V, W) raccordée au composant de phase (1) du premier système de courant ou de tension à partir d'un courant de phase ($i_U$, $i_V$, $i_W$) de la phase (U, V, W) raccordée au composant de phase (1) du premier système de courant ou de tension et à partir d'une tension de phase ($u_U$, $u_V$, $u_W$) de la phase (U, V, W) raccordée au composant de phase (1) du premier système de courant ou de tension et destinée à établir la valeur instantanée de la puissance de phase ($P_R$, $P_S$, $P_T$) de la phase (R, S, T) raccordée au composant de phase (1) du deuxième système de courant ou de tension à partir d'un courant de phase ($i_R$, $i_S$, $i_T$) de la phase (R, S, T) raccordée au composant de phase (1) du deuxième système de courant ou de tension et à partir d'une tension de phase ($u_R$, $u_S$, $u_T$) de la phase (R, S, T) raccordée au composant de phase (1) du deuxième système de courant ou de tension.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6900998 B2
- WO 2008067788 A1
- WO 2007023064 A1

**In der Beschreibung aufgeführte Nicht-Patentliteratur**

- A Methodology for Developing 'Chainlink' Converters. *EPE,* September 2009, vol. 8.
- On Dynamics and Voltage Control of Modular Multilevel Converter. *EPE,* September 2009, vol. 8